(19) Europäisches Patentamt
European Patent Office
Office européen des brevets

(11) Publication number: **0 572 667 A1**

# (12) EUROPEAN PATENT APPLICATION published in accordance with Art. 158(3) EPC

(21) Application number: **92905331.2**

(22) Date of filing: **19.02.92**

(86) International application number: **PCT/JP92/00166**

(87) International publication number: **WO 92/14790 (03.09.92 92/23)**

(51) Int. Cl.5: **C08L 101/00**, C08L 69/00, C08L 71/12, C08L 23/00, C08L 53/00

(30) Priority: **19.02.91 JP 45320/91**
**19.02.91 JP 45367/91**
**19.02.91 JP 45501/91**

(43) Date of publication of application: **08.12.93 Bulletin 93/49**

(84) Designated Contracting States: **DE FR GB IT**

(71) Applicant: **NIPPON ZEON CO., LTD.**
**6-1, Marunouchi 2-chome**
**Chiyoda-ku Tokyo 100(JP)**

(72) Inventor: **YAMAMOTO, Makoto Res. & Dev. Center**
**Nippon**
**Zeon Co. Ltd**
**2-1, Yako 1-chome**
**Kawasaki-ku**
**Kawasaki-shi Kanagawa 210(JP)**
Inventor: **HAYASHI, Atsushi Research & Development Center**
**Nippon Zeon Co. Ltd**
**2-1, Yako 1-chome**
**Kawasaki-ku**
**Kawasaki-shi Kanagawa 210(JP)**
Inventor: **KOBAYASHI, Toshiaki Research & Development Center**
**Nippon Zeon Co. Ltd**
**2-1, Yako 1-chome**
**Kawasaki-ku**
**Kawasaki-shi Kanagawa 210(JP)**
Inventor: **AKATANI, Shinichi Research & Development Center**
**Nippon Zeon Co. Ltd**
**2-1, Yako 1-chome**
**Kawasaki-ku**
**Kawasaki-shi Kanagawa 210(JP)**
Inventor: **HIROKAWA, Yoshitsugu Research & Development Center**
**Nippon Zeon Co. Ltd**
**2-1, Yako 1-chome**
**Kawasaki-ku**
**Kawasaki-shi Hanagawa 210(JP)**

(74) Representative: **Kraus, Walter, Dr. et al**
**Patentanwälte Kraus, Weisert & Partner**
**Thomas-Wimmer-Ring 15**
**D-80539 München (DE)**

## (54) THERMOPLASTIC RESIN COMPOSITION.

(57) A thermoplastic resin composition having excellent resistances to heat, impact and solvent and improved compatibility, characterized by comprising 100 parts by weight of a thermoplastic resin (A) and 0.5 to 35 parts by weight of a block copolymer (B) having aromatic vinyl compound units and isobutylene units. Preferred examples thereof include a composition comprising 100 parts by weight of a polycarbonate as the component (A) and 5 to 20 parts by weight of a styrene/isobutylene block copolymer having a styrene unit content of 10 to 45 % and an average molecular weight of 50,000 to 400,000 as the component (B).

EP 0 572 667 A1

## Technical Field

The present invention relates to a thermoplastic resin composition having excellent heat resistance, impact resistance, solvent resistance, compatibility, etc.

## Background Art

Thermoplastic resins are in use in various application fields. When they are used singly and unable to exhibit satisfactory properties, there are generally taken approaches of combining a thermoplastic resin with other resin, etc.

For example, polycarbonate resins are excellent in mechanical strengths (e.g. tensile strength, bending strength and impact strength), heat resistance, etc. In order to improve them in low-temperature impact resistance, solvent resistance, fluidity, etc., there were proposed, for example, a resin composition wherein a hydrogenated (styrene-isoprene-styrene) block copolymer is incorporated into a polycarbonate resin [e.g. Japanese Patent Application Kokai (Laid-Open) No. 145757/1983] and resin compositions wherein an acrylic rubber is incorporated into a polycarbonate resin [e.g. Japanese Patent Publication No. 18611/1968, Japanese Patent Publication No. 29308/1973, Japanese Patent Application Kokai (Laid-Open) No. 34153/1978 and Japanese Patent Application Kokai (Laid-Open) No. 143239/1981].

Polyphenylene ether type resins have excellent heat resistance. They are blended with a polystyrene type resin for moldability improvement, injection-molded and used widely in applications of heat-resistant molded article. In order to improve these molded articles in impact resistance, there were proposed various resin compositions. Such resin compositions include, for example, a composition obtained by incorporating a polystyrene and a rubber into a polyphenylene ether, disclosed in U.S Patent No. 3660531; a resin composition obtained by incorporating a polystyrene and an aromatic vinyl compound-conjugated diene compound block copolymer into a polyphenylene ether, disclosed in U.S. Patent No. 3994856; and a composition obtained by incorporating a polystyrene, a hydrogenated (styrene-conjugated diene compound-styrene) block copolymer and a butyl rubber-olefin graft copolymer into a polyphenylene ether, disclosed in Japanese Patent Application Kokai (Laid-Open) No. 127747/1986.

Meanwhile, polyolefin type resins have excellent moldability, water resistance and solvent resistance, are inexpensive and are therefore in wide use as various molded articles. They, however, have low heat resistance and are a crystalline resin. As a result, they have drawbacks, for example, in that their injection-molded products tend to cause shrinkage. Hence, there were proposed various blend compositions by combining a polyolefin type resin with a polyphenylene ether type resin to maintain respective merits and make up for respective drawbacks. The blend compositions, however, have poor compatibility, resulting in reduced mechanical strengths.

In order to improve the compatibility between polyolefin type resin and polyphenylene ether type resin and thereby improve the mechanical strengths of their blend composition, there were proposed resin compositions obtained by incorporating a hydrogenated (aromatic compound-conjugated diene compound) block copolymer into a polyolefin type resin and a polyphenylene ether type resin [e.g. Japanese Patent Application Kokai (Laid-Open) No. 76547/1985 and Japanese Patent Application Kokai (Laid-Open) No. 83149/1988]. The resin compositions, however, are unable to suppress the delamination appearing when made into injection-molded products.

Thus, thermoplastic resins have insufficient compatibility when used in combination with other resins, etc. As a result, the resulting resin compositions are not satisfactory in properties such as low-temperature impact resistance, heat resistance, solvent resistance, etc. Therefore, an improved technique has been desired.

## Disclosure of the Invention

The present inventors made an extensive study in order to solve the above-mentioned problems. As a result, the present inventors found that the use of a block copolymer having a particular structure can give a thermoplastic resin having improved compatibility as compared with conventional techniques. The finding has led to the completion of the present invention.

Hence, the present invention provides the following thermoplastic resin compositions (1) to (6).

(1) A thermoplastic resin composition characterized by comprising:

(A) 100 parts by weight of a thermoplastic resin, and

(B) 0.5-35 parts by weight of a block copolymer containing an aromatic vinyl compound unit and an isobutylene unit.

(2) A thermoplastic resin composition of the above (1) wherein the thermoplastic resin is a polycarbonate type resin, a polyphenylene ether type resin, an aromatic vinyl compound type resin or a polyolefin type resin.

(3) A thermoplastic resin composition of the above (1) wherein the thermoplastic resin is a mixture of 10-90 % by weight of a polyphenylene ether type resin and 90-10 % by weight of an aromatic vinyl compound type resin.

(4) A thermoplastic resin composition of the above (1) wherein the thermoplastic resin is a mixture of 10-90 % by weight of a polyphenylene ether type resin, 90-0 % by weight of an aromatic vinyl compound type resin and 10-90 % by weight of a polyolefin type resin.

(5) A thermoplastic resin composition of the above (1) wherein the block copolymer contains 50-95 % by weight of an isobutylene unit and 5-50 % by weight of an aromatic vinyl compound unit and has a number-average molecular weight of 30,000-500,000.

As an example of the thermoplastic resin (A) used in the present invention, there can be mentioned an aromatic vinyl compound type resin which contains at least 25 % by weight of a repeating unit represented by the following chemical formula 1 and which is a resinous polymer at room temperature:

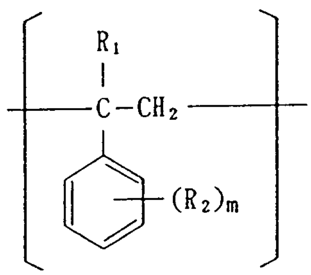 (1)

wherein $R_1$ and $R_2$ are each hydrogen, a halogen or a hydrocarbon group and may be the same or different, and m is an integer of 1-5.

As typical examples of the aromatic vinyl compound type resin, there can be mentioned a polystyrene, a high-impact polystyrene, a poly-α-methylstyrene, a poly-p-methylstyrene and a styrene-maleic anhydride copolymer.

As another example of the thermoplastic resin (A), there can be mentioned a polyolefin resin. Specific examples of the polyolefin resin are a homopolymer, random copolymer or block copolymer of α-olefins; a mixture thereof; a random copolymer, block copolymer or graft copolymer between α-olefin and other unsaturated monomer; and oxidation, halogenation or sulfonation products of said polymers. They are crystalline at least partially. Specific examples of these polymers are a polyethylene, a polypropylene, a polybutene, a polymethylpentene, a propylene-ethylene copolymer, an ethylene-butene-1 copolymer, a chlorinated polyethylene and a chlorinated polypropylene.

As still another example of the thermoplastic resin (A), a polyphenylene ether resin can be mentioned. As specific examples thereof, there can be mentioned a homopolymer, a copolymer, etc. each having a repeating unit represented by the following chemical formula 2:

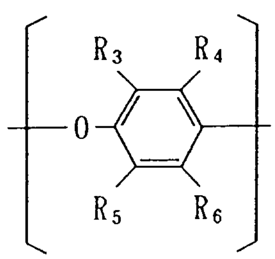 (2)

wherein $R_3$, $R_4$, $R_5$ and $R_6$ each represent a substituent selected from the group consisting of hydrogen, a halogen, a hydrocarbon group, a halogenated hydrocarbon group, a hydrocarbon oxy group or a halogenated hydrocarbon oxy group and may be the same or different.

As specific examples of the polyphenylene ether resin, there can be mentioned a poly(2,6-dimethyl-1,4-phenylene) ether, a poly(2,6-diethyl-1,4-phenylene) ether, a poly(2-methyl-6-ethyl-1,4-phenylene) ether, a poly(2,6-dibutyl-1,4-phenylene) ether, a poly(2,6-diphenyl-1,4-phenylene) ether, a poly(2,6-dimethoxy-1,-4-diphenylene) ether, a poly(2,6-dichloro-1,4-phenylene) ether, a copolymer between 2,6-dimethylphenol and 2,3,6-trimethylphenol and a copolymer between 2,6-dimethyl-phenol and 2,3,5,6-tetramethylphenol. A graft copolymer of styrene can also be used.

As still another example of the thermoplastic resin (A), a polycarbonate resin can be mentioned. Specific examples thereof are a homopolymer or copolymer having a repeating unit represented by the following chemical formula 3, and a mixture thereof. There can also be mentioned a thermoplastic branched polycarbonate resin obtained by reacting a polyfunctional aromatic compound with a dihydric phenol or a carbonate precursor.

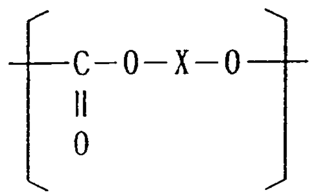 (3)

wherein X represents a di-valent aromatic group of a dihydric phenol.

This polycarbonate resin can be produced by a solvent process, i.e. by conducting a reaction between a dihydric phenol and a carbonate precursor such as phosgene or the like or an ester exchange reaction between a dihydric phenol and a carbonate precursor such as diphenyl carbonate or the like in a solvent such as methylene chloride or the like in the presence of a known acid acceptor and a molecular weight modifier.

As the dihydric phenol used preferably, there are bisphenols. 2,2-Bis(4-hydroxyphenyl)propane is particularly preferable. There may also be used compounds obtained by replacing part or all of 2,2-bis-(4-hydroxyphenyl)propane with other dihydric phenol. There can be further mentioned compounds such as bis(4-hydroxyphenyl)alkane other than 2,2-bis(4-hydroxyphenyl)-propane, hydroquinone, 4,4'-dihydroxydiphenyl, bis(4-hydroxyphenyl)cycloalkane, bis(4-hydroxyphenyl) sulfide, bis(4-hydroxyphenyl)sulfone, bis-(4-hydroxyphenyl)-sulfoxide, bis(4-hydroxyphenyl) ether and the like; halogenated bisphenols such as bis-(3,5-dibromo-4-hydroxyphenyl)propane, bis(3,5-dichloro-4-hydroxyphenyl)-propane and the like; and so forth.

As still other examples of the thermoplastic resin, there can be mentioned a polyvinyl chloride type resin, a polyvinyl acetate type resin, a poly(meth)-acrylate type resin, a poly(meth)acrylamide type resin, a poly(meth)acrylonitrile type resin, a polyamide type resin, a polyester type resin, a polyacetal type resin, a polysulfone type resin, a polyarylene sulfide type resin, a fluorine-containing resin, a polyimide type resin and a thermoplastic polyurethane type resin.

As the polyvinyl chloride type resin, there can be mentioned a polyvinyl chloride, a polyvinylidene chloride, a polyvinyl chloride-vinylidene chloride copolymer, etc. As the polyvinyl acetate type resin, there can be mentioned a polyvinyl acetate polymer, a partially saponified or acetalized product of a polyvinyl acetate polymer, etc. As the poly(meth)acrylate type resin, there can be mentioned, for example, a polymer or copolymer of (meth)acrylic acid ester such as methyl (meth)acrylate, ethyl (meth)acrylate or the like. As the poly(meth)acrylamide type resin, there can be mentioned, for example, a polymer or copolymer of (meth)acrylamide or alkyl group-substituted (meth)acrylamide. As the poly(meth)acrylonitrile type resin, there can be mentioned a poly(meth)acrylonitrile, etc. As the polyamide type resin, there can be mentioned a polycondensate between dicarboxylic acid and diamine, a polycondensate of $\alpha$-aminocarboxylic acid, a ring-opening polymer of cyclic lactam, etc. Specifically, there can be mentioned nylon 46, nylon 6, nylon 66, nylon 610, nylon 11, nylon 12, etc. As the polyacetal type resin, there can be mentioned, for example, a copolymer between polyoxymethylene, formaldehyde or trioxane and other aldehyde, cyclic ether cyclic, carbonate, epoxide, isocyanate or vinyl compound. As the polyester type resin, there can be mentioned a polyethylene terephthalate, a polybutylene terephthalate, etc.

The polysulfone type resin is a thermoplastic polysulfone having a structural unit represented by the following chemical formula 4 or 5:

$-(Ar\text{-}Y\text{-}Ar\text{-}SO_2)-$    (4)

wherein Ar represents a phenylene group and Y represents oxygen, sulfur or an aromatic diol group,

-(Ar-$SO_2$)- (5)

wherein Ar represents a phenylene group.

The polyarylene sulfide type resin is a polyarylene sulfide polymer or copolymer having a structural unit of the following chemical formula 6, and specifically includes a polyphenylene sulfide, a poly(4,4'-diphenylene sulfide), etc.

-(Ar-S)- (6)

wherein Ar represents a phenylene group or a phenylene group substituted with an alkyl group or with a substituted alkyl group.

As the fluorine-containing resin, a polytetrafluoroethylene, etc. can be mentioned. As the polyimide type resin, there can be mentioned, for example, a polyimide obtained by a reaction between aromatic diamine compound and aromatic tetracarboxylic acid dianhydride.

As the thermoplastic polyurethane type resin, there can be mentioned a thermoplastic polyurethane comprising, as the soft segment, a block of a polyol (polyester or polyether) and a diisocyanate and, as the hard segment, a block of a diisocyanate and a glycol. As the polyester diol, there can be mentioned a poly-(1,4-butyleneadipate), a poly(1,6-hexaneadipate), a polycaprolactone, etc. The polyether diol includes a polyethylene glycol, a polypropylene glycol, a polyoxytetramethylene glycol, etc. As the glycol, there can be mentioned ethylene glycol, 1,4-butanediol, 1,6-hexanediol, etc. The diisocyanate includes aromatic, alicyclic and aliphatic types, and there can be mentioned, for example, tolylene diisocyanate, 4,4'-diphenylmethane diisocyanate, hexamethylene diisocyanate and isophorone diisocyanate.

The thermoplastic resin used in the present invention can be further exemplified by various copolymers. As specific examples of the various copolymers, there can be mentioned a styrene-acrylonitrile copolymer, a styrene-butadiene-acrylonitrile copolymer, a styrene-ethyl acrylate copolymer, a styrene-acrylonitrile-ethyl acrylate copolymer, a styrene-ethylene-propylene-acrylonitrile copolymer, a styrene-butadiene-methacrylic acid ester copolymer, an ethylene-vinyl acetate copolymer, a propylene ethyl acrylate copolymer, a vinyl chloride-vinyl acetate copolymer, a vinyl chloride-ethylene copolymer, a vinyl chloride-propylene copolymer, a vinyl chloride-isobutylene copolymer, a vinyl chloride-(meth)acrylic acid ester copolymer, a vinyl chloride-maleic acid ester copolymer, a vinyl chlorideacrylonitrile copolymer, a vinyl chloride-vinylidene chloride-vinyl acetate copolymer, a vinyl acetate-ethylene or propylene copolymer, a vinyl acetate-acrylonitrile copolymer, a vinyl acetate-acrylic acid ester copolymer.

The molecular weight of the thermoplastic resin used in the present invention is not particularly restricted, but its number-average molecular weight is ordinarily 5,000-500,000, preferably 10,000-40,000. When the number-average molecular weight is smaller than 5,000, the resulting thermoplastic resin composition has low mechanical strengths. Therefore, such a molecular weight is not preferable. When the number-average molecular weight is larger than 500,000, the thermoplastic resin composition has a high viscosity and low processability. Therefore, such a molecular weight is not preferable.

The block copolymer containing an aromatic vinyl compound unit and an isobutylene unit, used in the present invention is an (aromatic vinyl compound-isobutylene) block copolymer which has at least one aromatic vinyl compound polymer block and at least one isobutylene polymer block and which is rubbery at room temperature. The aromatic vinyl compound can be exemplified by styrene, $\alpha$-methylstyrene, $\beta$-methylstyrene,p-methylstyrene, tert-butylstyrene, monochlorostyrene, dichlorostyrene, methoxystyrene and indene. The structure of the block copolymer is a branched block copolymer or a linear block copolymer and includes a mixture thereof.

With respect to the isobutylene unit content and aromatic vinyl compound unit content of the block copolymer used in the present invention, the isobutylene unit content is 50-95 % by weight, preferably 55-90 % by weight and the aromatic vinyl compound unit content is 5-50 % by weight, preferably 10-45 % by weight. When the aromatic vinyl compound unit content is less than 5 % by weight, the resulting thermoplastic resin composition has increased fluidity at high temperatures. Therefore, such a content is not preferable. When the aromatic vinyl compound unit content is more than 50 parts by weight, the thermoplastic resin composition has low impact resistance. Therefore, such a content is not preferable. The number-average molecular weight of the block copolymer is 30,000-500,000, preferably 50,000-400,000. When the number-average molecular weight is smaller than 30,000, the resulting thermoplastic resin composition has increased fluidity. When the number-average molecular weight is larger than 500,000, the thermoplastic resin composition has a high viscosity and low processability. Therefore, such a molecular weight is not preferable.

In the production of the block copolymer used in the present invention, other cation-polymerizable monomer may be copolymerized as long as the resulting block copolymer does not impair the properties of the thermoplastic resin composition of the present invention. As the other cation-polymerizable monomer, there can be mentioned 1-butene, pentene, hexene, butadiene, isoprene, methyl vinyl ether, etc.

The process for production of the block copolymer used in the present invention is not particularly restricted, but there can be mentioned a process wherein an aromatic vinyl compound and isobutylene are polymerized in an inert solvent such as hexane, methylene chloride or the like in the presence of an initiator system consisting of, for example, a Lewis acid and an organic compound (hereinafter referred to as initiator compound) capable of forming an active seed for cationic polymerization in combination with said Lewis acid, with a third component (e.g. amine or ester) being added as necessary.

The initiator compound is an organic compound having a functional group such as alkoxy group, acyloxy group, halogen or the like, and includes, for example, bis(2-methoxy-2-propyl)benzene, bis(2-acetoxy-2-propyl)-benzene and bis(2-chloro-2-propyl)benzene.

As the Lewis acid, there can be mentioned titanium tetrachloride, boron trichloride, aluminum chloride, etc. The amine is exemplified by triethylamine. The ester is exemplified by ethyl acetate.

The linear block copolymer as the block copolymer used in the present invention can be produced by a process which comprises polymerizing an aromatic vinyl compound until the reaction is substantially over, by using, as the initiator system, a Lewis acid and an initiator system, a Lewis acid and an initiator compound having a functional group, then adding isobutylene to the polymerization system and, after the polymerization reaction of isobutylene is substantially over, polymerizing again the aromatic vinyl compound. There can also be used a process which comprises polymerizing isobutylene until the reaction is over, by using a Lewis acid and an initiator compound having two functional groups and then adding an aromatic vinyl compound to the polymerization system to continue polymerization.

The branched block copolymer as the block copolymer used in the present invention can be produced by a process which comprises polymerising isobutylene until the reaction is over, by using a Lewis acid and an initiator compound ordinarily having at least three functional groups and then adding an aromatic vinyl compound to the polymerization system to continue polymerization.

The amounts of the thermoplastic resin (A) and the block copolymer (B) containing an aromatic vinyl compound unit and an isobutylene unit, both used in the present invention are such that the amount of the component (B) is 0.5-35 parts by weight, preferably 5-30 parts by weight per 100 parts by weight of the component (A). When the amount of the component (B) is less than 0.5 part by weight, the resulting thermoplastic resin composition is not improved in impact resistance and fluidity. Therefore, such an amount is not preferable. When the amount of the component (B) is more than 35 parts by weight, the thermoplastic resin composition has low solvent resistance, heat resistance and rigidity. Therefore, such an amount is not preferable.

When the thermoplastic resin used in the present invention is a polycarbonate type resin, a polyphenylene ether type resin, an aromatic vinyl compound type resin or a polyolefin type resin, a particularly preferable thermoplastic resin composition can be obtained.

For example, when a polycarbonate type resin is blended with the compound (B), there can be obtained a polycarbonate type thermoplastic resin composition having an excellent balance between low-temperature impact resistance and heat stability. In this case, the component (B) is used in an amount of 0.5-35 parts by weight, preferably 0.5-30 parts by weight, more preferably 5-20 parts by weight per 100 parts by weight of the polycarbonate type resin.

When the amount of the component (B) is less than 0.5 part by weight, the resulting thermoplasitc resin composition is not improved in any of low-temperature impact resistance and fluidity. When the amount is more than 35 parts by weight, the polycarbonate type thermoplastic resin composition has low solvent resistance and rigidity. Therefore, such an amount is not preferable.

When an aromatic vinyl compound type resin is blended with the block copolymer (B) containing an aromatic vinyl compound unit and an isobutylene unit, there can be obtained an aromatic vinyl compound type thermoplastic resin composition excellent in compatibility, in particular and improved in low-temperature impact resistance. In this case, the component (B) is used in an amount of 0.5-35 parts by weight, preferably 5-20 parts by weight per 100 parts by weight of the aromatic vinyl compound type resin. When the amount of the component (B) is less than 0.5 part by weight, the resulting thermoplastic resin composition is not improved in low-temperature impact resistance. When the amount is more than 35 parts by weight, the aromatic vinyl compound type thermoplastic resin composition has low moldability and rigidity. Therefore, such an amount is not preferable.

When a mixture of a polyphenylene ether resin and an aromatic vinyl compound type resin is blended with the block copolymer (B) containing an aromatic vinyl compound unit and an isobutylene unit, there can

be obtained a polyphenylene ether type thermoplastic resin composition having excellent low-temperature impact resistance.

In this case, with respect to the amounts of the polyphenylene type resin and the aromatic vinyl compound type resin, the amount of the polyphenylene ether type resin is 10-90 % by weight, preferably 20-80 % by weight and the amount of the aromatic vinyl compound type resin is 90-10 % by weight, preferably 80-20 % by weight. When the amount of the polyphenylene ether type resin is less than 10 % by weight, no sufficient heat resistance can be obtained. When the amount is more than 90 % by weight, the resulting thermoplastic resin composition has low fluidity and is difficult to injection-mold. Therefore, such an amount is not preferable. When the amount of the aromatic vinyl compound type resin is less than 10 % by weight, the resulting thermoplastic resin composition has low moldability. When the amount is more than 90 % by weight, the composition has low heat resistance. Therefore, such an amount is not preferable.

The amount of the component (B) is 0.5-35 parts by weight, preferably 2-30 parts by weight, more preferably 5-25 parts by weight per 100 parts by weight of the total of the polyphenylene type resin and the aromatic vinyl compound type resin. When the amount of the component (B) is less than 0.5 part by weight, no sufficient impact resistance can be obtained. When the amount is more than 35 parts by weight, the resulting thermoplastic resin composition has improved impact strength but low heat resistance. Therefore, such an amount is not preferable.

When a mixture of a polyphenylene ether type resin and an aromatic vinyl compound type resin is blended with the block copolymer (B) containing an aromatic vinyl compound unit and an isobutylene unit, there can be obtained a polyphenylene ether type-polyolefin type thermoplastic resin composition excellent in impact resistance, heat resistance and solvent resistance and improved in compatibility, in particular.

In this case, with respect to the amounts of the polyphenylene ether type resin, the aromatic vinyl compound type resin and the polyolefin type resin, the amount of the polyphenylene ether resin is 10-90 % by weight, preferably 20-80 % by weight; the amount of the aromatic vinyl compound type resin is 90-0 % by weight, preferably 70-10 % by weight; and the amount of the polyolefin type resin is 10-90 % by weight, preferably 20-80 % by weight. When the amount of the polyphenylene ether type resin is less than 10 % by weight, no sufficient heat resistance can be obtained. When the amount is more than 90 % by weight, the resulting thermoplastic resin composition has low fluidity and is difficult to injection-mold. Therefore, such an amount is not preferable. When the amount of the aromatic vinyl compound type resin is more than 90 % by weight, the thermoplastic resin composition has low heat resistance. Therefore, such an amount is not preferable. When the amount of the polyolefin type resin is less than 10 % by weight, the thermoplastic resin composition has insufficient solvent resistance. When the amount is more than 90 % by weight, the composition has low heat resistance. Therefore, such an amount is not preferable.

The amount of the component (B) is 0.5-35 parts by weight, preferably 2-30 parts by weight, more preferably 5-25 parts by weight per 100 parts by weight of the total of the polyphenylene ether type resin, the aromatic vinyl compound type resin and the polyolefin type resin. When the amount of the component (B) is less than 0.5 part by weight, no sufficient compatibility is obtained between the polyphenylene ether type resin and the polyolefin type resin. When the amount is more than 35 parts by weight, the resulting thermoplastic resin composition has low heat resistance. Therefore, such an amount is not preferable.

The thermoplastic resin composition of the present invention can comprise, as necessary, a filler and various additives such as flame retarder, ultraviolet absorber, anti-oxidant, antistatic agent, lubricant, pigment and the like as long as the effects of the present invention are not impaired substantially.

The filler is added for improvement of the present thermoplastic resin composition in mechanical strengths and durability or for loading of the composition. As such a filler, there can be mentioned, for example, a glass fiber, glass beads, glass flakes, carbon black, calcium sulfate, calcium carbonate, calcium silicate, titanium oxide, alumina, silica, asbestos, talc, clay, mica and quartz.

As the various additives, there can be mentioned, for example, an antioxidant such as hindered phenol type antioxidant, phosphorus type antioxidant (e.g. phosphorous acid ester or phosphoric acid ester), amine type antioxidant or the like; an ultraviolet absorber such as benzotriazole type, benzophenone type or the like; an external lubricant such as aliphatic carboxylic acid ester type, paraffin type or the like; an organic compound type stabilizer such as organotin compound, organolead compound or the like; a flame retarder; a release agent; an antistatic agent; and a coloring agent.

As the hindered phenol type antioxidant, there can be preferably used, for example, 2,6-di-tert-butyl-p-cresol, n-octadecyl-3-(4'-hydroxyl-3',5'-di-tert-butylphenyl)propionate. As the phosphorus type antioxidant, tri(nonylphenyl) phosphite, etc. are used. The phosphorus type antioxidant may be used in combination with the hindered phenol type antioxidant.

The thermoplastic resin composition of the present invention can be prepared by kneading essential components, i.e. (A) a thermoplastic resin and (B) a block copolymer containing an aromatic vinyl compound unit and an isobutylene unit, in given proportions. The kneading can be conducted by a method used ordinarily, for example, a method using a ribbon blender, a Henschel mixer, a Banbury mixer, a drum tumbler, a single-screw extruder, a double-screw extruder, a co-kneader, a multi-screw extruder or the like. The appropriate heating temperature employed during kneading is ordinarily 250-300 °C.

Thus, according to the present invention there can be obtained a thermoplastic resin composition which, as compared with conventional techniques, is improved in heat stability, solvent resistance and compatibility and is superior in low-temperature impact resistance.

**Industrial Applicability**

The thus obtained thermoplastic resin composition, by being subjected to various known molding methods such as injection molding, extrusion molding, compression molding, calender molding, rotational molding and the like, can be made into molded articles (e.g. automobile bumper) used in automobiles, molded articles used in home electric appliances, molded articles used in office automation appliances, housing members, optical instrument members, building materials, etc.

**Best Mode for Carrying Out the Invention**

The present invention is hereinafter described more specifically by way of Examples. In the Examples, Comparative Examples and Reference Examples, parts and % are by weight unless otherwise specified.

**Examples of production of block copolymers**

In a 3-liter reactor were placed 540 ml of methylene chloride, 540 ml of n-hexane, 0.76 g of 1,4-bis(2-chloro-2-propyl)benzene, 0.83 g of triethylamine, 7.6 g of titanium tetrachloride and isobutylene of an amount shown in each Test No. column of Table 1. Polymerization was conducted at -65 °C for 4 hours. Then, styrene of an amount shown in each Test No. column of Table 1 was added and the polymerization reaction was continued for a further 2 hours, whereby four styrene-isobutylene-styrene block copolymers were synthesized. Each of the block copolymers showed a yield of substantially 100 %. The bound styrene content, number-average molecular weight and non-uniformity index of molecular weight distribution (ratio of weight-average molecular weight to number-average molecular weight) of each block copolymer are shown in Table 1.

Table 1

| Test No. | 1 | 2 | 3 | 4 |
|---|---|---|---|---|
| Block copolymer | a | b | c | d |
| Isobutylene (g)<br>Styrene (g) | 163.5<br>69.0 | 232.4<br>99.6 | 139.5<br>93.0 | 197.6<br>34.9 |
| Bound styrene content (%) | 30 | 29 | 40 | 15 |
| Weight-average molecular weight $x10^{-4}$ | 15.5 | 23.0 | 17.3 | 15.1 |
| Number-average molecular weight $x10^{-4}$ | 10.0 | 13.8 | 10.2 | 10.1 |
| Non-uniformity index | 1.55 | 1.67 | 1.70 | 1.50 |

Incidentally, the bound styrene content of each block copolymer was measured by NMR. The weight-average molecular weight and molecular weight distribution of each block copolymer were obtained by measuring the molecular weight distribution curve of the copolymer by high performance liquid chromatography (HLC-802A manufactured by TOSOH CORPORATION) and making calculation using the curve based on a calibration curve previously prepared from the analytical result for a standard polystyrene of known molecular weight. In this measurement, there were used, in combination, a column G-4000 H filled with a polystyrene gel and a column G-5000 H, and the measurement conditions were column temperature = 40 °C, carrier (tetrahydrofuran) flow rate = 1.3 ml/min and sample concentration = 0.6 g/liter.

Evaluations of thermoplastic resin compositions were made by the following methods.

**[**Izod impact strength**]**

Was measured in accordance with ASTM D 256 or JIS K 7110 (measurement temperature: -40 °C, -30 °C, 23 °C).

**[**Charpy impact strength**]**

Was measured in accordance with JIS K 6745 and K 7111 (measurement temperature: 23 °C).

**[**Bending strength**]**

Was measured in accordance with ASTM D 790.

**[**Heat stability**]**

A sample was allowed to stay in a melt indexer at 300 °C for 15 minutes, followed by extrusion. The condition of the resulting strand was rated visually.

o: Good
△: Slight foaming and color change
x: Severe foaming and color change

**[**Solvent resistance**]**

Was measured in accordance with a 1/4-ellipse method (Nakatsuji et al., Shikizai, vol. 39, p.455, 1966). Solvent resistance is shown by the critical strain of a sample after having been immersed in a mixed solvent of toluene/iso-octane/methanol (42.5/42.5/15% by volume) for 5 minutes. Lower solvent resistance gives a larger critical strain.

**[**Observation of delamination**]**

A dumbbell specimen of ASTM D 638 Type III was subjected to a tensile test, and the cut condition of the specimen was rated.

o: No delamination
△: Delamination is seen
x: Severe delamination

Examples 1-5 and Comparative Examples 1-2

There were blended (A) a polystyrene (number average molecular weight = 100,000) and (B) one of the styrene-isobutylene-styrene block copolymers shown in Table 1, in amounts shown in Table 2. Each of the resulting blends was pelletized using an extruder. The resulting pellets were made into a test piece to measure its Izod impact strength (-30 °C and 23 °C, JIS K 7110). Also, a resin composition containing (C) a hydrogenated (styrene-butadiene-styrene) block copolymer was measured for Izod impact strength in the same manner. The results are shown in Table 2.

Table 2

| | Kinds and amounts of components used | | | | Test results | |
|---|---|---|---|---|---|---|
| | Component (A) | Component (B) | | Component (C) | Izod impact strength (Kg·cm/cm) | |
| | | Kind | Amount used | Amount used | 23°C | -30°C |
| Example 1 | 100 | a | 5 | | 3.0 | 2.1 |
| 2 | 100 | a | 15 | | 3.5 | 2.3 |
| 3 | 100 | b | 10 | | 3.4 | 2.3 |
| 4 | 100 | c | 10 | | 3.2 | 2.1 |
| 5 | 100 | d | 10 | | 3.3 | 2.2 |
| Comparative Example 1 | 100 | | | | 1.6 | 1.2 |
| 2 | 100 | | | 10 | 2.9 | 1.9 |

Examples 6-12 and Comparative Examples 3-4

There were blended (A-1) a poly(2,6-dimethyl-1,4-phenylene) ether (number-average molecular weight = 50,000), (A-2) a high-impact polystyrene and (B) one of the styrene-isobutylene-styrene block

copolymers shown in Table 1, in amounts shown in Table 3. Each of the resulting blends was pelletized using an extruder. The resulting pellets were made into a test piece to measure its Izod impact strength (-40°C and 23°C, ASTM D 256). Also, a resin composition containing (C) a hydrogenated (styrene-butadiene-styrene) block copolymer was measured for Izod impact strength in the same manner. The results are shown in Table 3.

Table 3

| | Kinds and amounts of components used | | | | | | Izod impact strength (kg·cm/cm) | |
|---|---|---|---|---|---|---|---|---|
| | Component (A-1) | Component (A-2) | Component (B) a | b | c | Component (C) | 23°C | -40°C |
| Example 6 | 50 | 50 | 10 | | | | 40 | 16 |
| 7 | 20 | 80 | 10 | | | | 35 | 13 |
| 8 | 80 | 20 | 10 | | | | 30 | 11 |
| 9 | 50 | 50 | | 10 | | | 42 | 17 |
| 10 | 50 | 50 | | | 10 | | 32 | 12 |
| 11 | 50 | 50 | 5 | | | | 25 | 10 |
| 12 | 50 | 50 | 20 | | | | ** | 20 |
| Comparative Example 3 | 50 | 50 | | | | | 15 | 5 |
| 4 | 50 | 50 | | | | 10 | 30 | 8 |

** No breakage

Examples 13-20 and Comparative Examples 5-6

There were blended (A-1) a poly (2,6-dimethyl-1,4-phenylene) ether (number-average molecular weight = 50,000), (A-2) a high-impact polystyrene, (A-3) a polypropylene and (B) one of the styrene-isobutylene-styrene block copolymers shown in Table 1, in amounts shown in Table 4. Each of the resulting blends was pelletized using an extruder. The resulting pellets were made into a test piece to measure its Izod impact strength (23°C, ASTM D 256) and delamination. Also, a resin composition containing (C) a hydrogenated (styrene-butadiene-styrene) block copolymer was measured in the same manner. The results are shown in Table 4.

Table 4

| | Kinds and amounts of components used | | | | | | | Izod impact strength (kg·cm/cm) | Delamination |
|---|---|---|---|---|---|---|---|---|---|
| | Component (A-1) | Component (A-2) | Component (A-3) | Component (B) a | Component (B) b | Component (B) c | Component (C) | | |
| Example 13 | 40 | 10 | 50 | 10 | | | | 18 | o |
| 14 | 70 | 10 | 20 | 10 | | | | 16 | o |
| 15 | 20 | 60 | 20 | 10 | | | | 14 | o |
| 16 | 30 | | 70 | 10 | | | | 12 | o |
| 17 | 40 | 10 | 50 | 5 | | | | 12 | o |
| 18 | 40 | 10 | 50 | 20 | | | | 30 | o |
| 19 | 40 | 10 | 50 | | 10 | | | 20 | o |
| 20 | 40 | 10 | 50 | | | 10 | | 14 | o |
| Comparative Example 5 | 40 | 10 | 50 | | | | | 1 | x |
| 6 | 40 | 10 | 50 | | | | 10 | 8 | |

Examples 21-24 and Comparative Examples 7-10

There were blended (A) a polycarbonate (number-average molecular weight = 30,000) and (B) one of the styrene-isobutylene-styrene block copolymers shown in Table 1, in amounts shown in Table 5. Each of the

resulting blends was pelletized using an extruder. The resulting pellets were made into test pieces to measure their Izod impact strength (-30°C, ASTM D 256), bending strength, heat stability and solvent resistance. Also, resin compositions containing (C-1) a hydrogenated (styrene-butadiene styrene) block copolymer or (C-2) a styrene-methyl methacrylate graft acrylic rubber were measured in the same manner. The results are shown in Table 5.

Table 5

| | Kinds and amounts of components used | | | | | Test results | | | |
|---|---|---|---|---|---|---|---|---|---|
| | Component (A) | Component (B) | | Component (C) | | Izod impact strength (kg·cm/cm) | Bending strength (kg/cm$^2$) | Heat stability | Solvent resistance |
| | | Kind | Amount used | Kind | Amount used | | | | |
| Example 21 | 100 | a | 15 | | | 61 | 23500 | ○ | 0.50 |
| 22 | 100 | b | 10 | | | 58 | 24000 | ○ | 0.40 |
| 23 | 100 | c | 15 | | | 51 | 24000 | ○ | 0.71 |
| 24 | 100 | d | 15 | | | 63 | 23000 | ○ | 0.54 |
| Comparative Example 7 | 100 | | | | | 3 | 24000 | ○ | 0.20 |
| 8 | 100 | a | 40 | | | 60 | 20500 | ○ | 1.0< |
| 9 | 100 | | | (C-1) | 5 | 41 | 23000 | | 0.45 |
| 10 | 100 | | | (C-2) | 15 | 51 | 24000 | | 0.52 |

Examples 25-26 and Comparative Example 11

These were blended (A-1) a polyvinyl chloride (number-average molecular weight = 30,000), (A-2) a Styrenemethacrylate-acrylonitrile copolymer and (B) one of the styrene-isobutylene-styrene block copolymers shown in Table 1, in amounts shown in Table 6. Each of the resulting blends was pelletized using an extruder. The resulting pellets were made into a test piece to measure its Charpy impact strength (23°C) at each test hour of the weatherability test. Also, a resin composition containing (C) an ethyl acrylate-styrene-methyl methacrylate copolymer was measured in the same manner. The results are shown in Table 6.

Table 6

| | Component (A-1) | Component (A-2) | Component (B) | | Component (C) | Charpy impact strength (kg·cm/cm$^2$) Wheatherability (hr) | | | |
|---|---|---|---|---|---|---|---|---|---|
| | | | b | d | | 0 | 300 | 500 | 1000 |
| Example 25 | 90 | 10 | 10 | | | 18.1 | 13.5 | 7.9 | 4.8 |
| 26 | 90 | 10 | | 10 | | 20.9 | 15.2 | 9.6 | 5.5 |
| Comparative Example 11 | 90 | 10 | | | 10 | 15.2 | 10.1 | 3.4 | 2.1 |

Examples 27-28 and Comparative Examples 12-13

There were blended (A) a methyl methacryalte-styrene copolymer (number-average molecular weight = 60,000) and (B) one of the styrene-isobutylene-styrene block copolymers shown in Table 1, in amounts shown in Table 7. Each of the resulting blends was pelletized using an extruder. The resulting pellets were

made into test pieces to measure their Izod impact strength (-30 °C and 23 °C, JIS K 7110), tensile strength and elongation. Also, a resin composition containing (C) a hydrogenated (styrene-butadiene-styrene) block copolymer was measured in the same manner. The results are shown in Table 7.

Table 7

| | Component (A) | Component (B) | | Component (C) | Izod impact strength (Kg·cm/cm) | | Tensile strength ($kg/cm^2$) | Elongation (%) |
|---|---|---|---|---|---|---|---|---|
| | | a | d | | 23°C | -30°C | | |
| Example 27 | 100 | 20 | | | 4.2 | 3.3 | 370 | 20 |
| 28 | 100 | | 10 | | 3.8 | 3.0 | 360 | 30 |
| Comparative Example 12 | 100 | | | | 1.5 | 1.0 | 580 | 2 |
| 13 | 100 | | | 10 | 2.8 | 2.0 | 350 | 20 |

Examples 29-30 and Comparative Examples 14-15

There were blended (A) an acrylonitrile-styrene copolymer (component ratio = 30/70, number-average molecular weight = 50,000) and (B) one of the styrene-isobutylene-styrene block copolymers shown in Table 1, in amounts shown in Table 8. Each of the resulting blends was pelletized using an extruder. The resulting pellets were made into test pieces to measure their Izod impact strength (-30 °C and 23 °C, JIS K 7110), tensile strength and elongation. Also, a resin composition containing (C) a hydrogenated (styrene-butadiene-styrene) block copolymer was measured in the same manner. The results are shown in Table 8.

Table 8

| | Component (A) | Component (B) | | Component (C) | Izod impact strength (Kg·cm/cm) | | Tensile strength ($kg/cm^2$) | Elongation (%) |
|---|---|---|---|---|---|---|---|---|
| | | b | d | | 23°C | -30°C | | |
| Example 29 | 100 | 20 | | | 4.5 | 3.6 | 420 | 30 |
| 30 | 100 | | 10 | | 4.3 | 3.5 | 410 | 30 |
| Comparative Example 14 | 100 | | | | 2.6 | 1.9 | 730 | 2 |
| 15 | 100 | | | 10 | 3.8 | 2.7 | 410 | 30 |

Examples 31-35 and Comparative Examples 16-20

There was blended (A) one of the thermoplastic resins shown in Table 9 and (B) the styrene-isobutylene-styrene block copolymer shown in Table 1, in amounts shown in Table 9. Each of the resulting blends was pelletized using an extruder. The resulting pellets were made into a test piece to measure its

Izod impact strength (-30 ° C, JIS K 7110). The results are shown in Table 9.

Table 9

| Example | Comparative Example | Component (A)* (parts by weight) | | | | | Component (B) (parts by weight) | Izod impact strength (Kg.cm/cm) |
|---|---|---|---|---|---|---|---|---|
| | | PP | PBT | PMMA | Nylon 6 | PPS | | |
| 31 | | 100 | | | | | 10 | 12.0 |
| | 16 | 100 | | | | | | 8.0 |
| 32 | | | 100 | | | | 10 | 5.1 |
| | 17 | | 100 | | | | | 2.7 |
| 33 | | | | 100 | | | 10 | 2.8 |
| | 18 | | | 100 | | | | 1.4 |
| 34 | | | | | 100 | | 10 | 6.0 |
| | 19 | | | | 100 | | | 5.1 |
| 35 | | | | | | 100 | 10 | 8.5 |
| | 20 | | | | | 100 | | 3.1 |

* PP: Polypropylene
PBT: Polybutylene terephthalate
PMMA: Polymethyl methacrylate
PPS: Polyphenylene sulfide

## Claims

**1.** A thermoplastic resin composition characterized by comprising:

(A) 100 parts by weight of a thermoplastic resin, and
(B) 0.5-35 parts by weight of a block copolymer containing an aromatic vinyl compound unit and an isobutylene unit.

**2.** A composition according to Claim 1, wherein the thermoplastic resin is a polycarbonate type resin, a polyphenylene ether type resin, an aromatic vinyl compound type resin or a polyolefin type resin.

**3.** A thermoplastic resin composition according to Claim 1, wherein the thermoplastic resin is a mixture of 10-90 % by weight of a polyphenylene ether type resin and 90-10 % by weight of an aromatic vinyl compound type resin.

**4.** A thermoplastic resin composition according to Claim 1, wherein the thermoplastic resin is a mixture of 10-90 % by weight of a polyphenylene ether type resin, 90-0 % by weight of an aromatic vinyl compound type resin and 10-90 % by weight of a polyolefin type resin.

**5.** A composition according to Claim 1, wherein the block copolymer contains 5-50 % by weight of an aromatic vinyl compound unit and 95-50 % by weight of an isobutylene unit and has a number-average molecular weight of 30,000-500,000.

# INTERNATIONAL SEARCH REPORT

International Application No PCT/JP92/00166

**I. CLASSIFICATION OF SUBJECT MATTER** (if several classification symbols apply, indicate all) [6]

According to International Patent Classification (IPC) or to both National Classification and IPC

Int. Cl$^5$ C08L101/00, C08L69/00, C08L71/12, C08L23/00, C08L53/00

**II. FIELDS SEARCHED**

Minimum Documentation Searched [7]

| Classification System | Classification Symbols |
|---|---|
| IPC | C08L101/00, C08L69/00, C08L71/12, C08L23/00, C08L53/00, C08F297/00, C08F295/00 |

Documentation Searched other than Minimum Documentation to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | JP, A, 48-47931 (Velsicol Chemical Corp.), July 7, 1973 (07. 07. 73), Claim & US, A, 3644252 & DE, A, 2141912 & FR, A, 2157167 & GB, A, 1368116 & CA, A, 955698 & NL, A, 7114129 & BE, A, 773568 & CH, A, 556380 & ZA, A, 7106624 | 1-5 |
| A | JP, A, 54-90391 (ANIC S.p. A.), July 18, 1979 (18. 07. 79), Claim, lines 6 to 10, lower part, right column, page 3 & US, A, 4262095 & DE, A, 2855133 & FR, A, 2412575 & GB, A, 2010292 & CA, A, 1118931 & NL, A, 7812215 & BE, A, 872905 & CS, A, 7808572 & ZA, A, 7806985 & SE, A, 7813082 & FI, A, 7803893 & DK, A, 7805683 | 1-5 |
| A | JP, A, 3-287606 (Nippon Zeon Co., Ltd.), December 18, 1991 (18. 12. 91), Claim (Family: none) | 1-5 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| March 21, 1992 (21. 03. 92) | April 21, 1992 (21. 04. 92) |
| **International Searching Authority** | **Signature of Authorized Officer** |
| Japanese Patent Office | |